# EUROPEAN PATENT APPLICATION

(11) **EP 3 046 228 A1**
(43) Date of publication of application: **20.07.2016**
(21) Application number: 15151125.0
(22) Date of filing: 14.01.2015
(51) Int. Cl.: H02K 1/32, H02K 9/08, H02K 9/10

(54) **A generator rotor for an electric generator and a method for construction thereof**

(71) Applicant: Siemens Aktiengesellschaft, 80333 München (DE)
(72) Inventor: Singh, Vijayendra, 122001 Gurgaon (IN)
(74) Representative: Isarpatent

(57) **Abstract**

The present invention relates to a generator rotor (4) for an electric generator (1) and a method (100) for construction of the generator rotor (4). The generator rotor (4) extends along a longitudinal axis (13), and rotations of the generator rotor (4) are defined by a spinning direction (15). The generator rotor (4) includes a rotor shaft (6) and at least one spline (22). The spline (22) is arranged on a portion (21) of the rotor shaft (6), and the spline (22) longitudinally extends in a direction (24) that is off-axial to the longitudinal axis (13).

## Description

The present invention relates to a generator rotor for an electric generator, and more particularly to a generator rotor extending along a longitudinal axis and comprising a rotor shaft and at least one spline arranged on a portion of the rotor shaft for directing a coolant fluid flowing on the portion during the operation of the generator rotor. The present invention also relates to a method for construction of the aforementioned generator rotor for the electric generator.

Electric generators are widely used in power generation units for the purpose of generating electric power from fossil fuels, renewable energy sources, et cetera. Different types of power generation units include steam turbine based power plants, gas turbine based power plants, aero-derivative turbine based power plants, wind turbine based power plants, hydroelectric turbine based hydroelectric power generation units (dams), et cetera. The aforementioned power generation units are categorized based on operational type (i.e. based on the principle of operation) and types of fuel used therein.

The location of an electric generator in any power generation unit depends on the operational type of the power generation unit. In a steam turbine based power plant, the electrical generator can be operationally located between a steam generation unit (such as a boiler) and a steam exhaust unit. In a gas turbine based power plant or an aero-derivative based power plant, the electrical generator can be operationally located between a gas combustion unit and a gas exhaust unit.

The electric generator forms an important part of the power generation unit, and the electric generator is crucial in producing electric power by utilizing the mechanical rotations executed/underwent by certain parts of the electric generator. The electric generator primarily comprises a stator and a rotor. The stator comprises stationary components, viz. a stator core and stator windings. The stator windings are windings provided on the stator core, and the stator windings are made of electrically conducting materials (for example metals, metal based alloys, et cetera). The rotor comprises motional components, viz. a rotatable rotor shaft and rotor windings. The rotor windings are windings provided on the rotor shaft, and the rotor windings are also made of electrically conducting materials (for example metals, metal based alloys, et cetera). The electric power produced therein can be tapped either from the rotor or from the stator depending on the type of electric generator.

The rotor and the stator are both electromagnetically and operably/operationally coupled for the operation of the electric generator. The stator can be annularly shaped and fixed, such as a fixed hollow cylinder, and the rotor can be arranged inside the stator for executing rotations during the operation of the electric generator. In such an electrical generator, the stator typically surrounds the rotor. Alternatively, the rotor can be a rotatable hollow cylinder and the stator can be arranged inside the rotor and fixed to a casing of the electrical generator, for enabling rotations of the rotor during the operation of the electric generator. In this type of an electric generator, the rotor typically surrounds the stator.

The mechanical rotations executed by the rotor during the operation of the electric generator, the electric currents flowing through the windings (rotor windings and the stator windings), and the proximity of the generator to working fluids - especially in the case of steam turbine based power plants (working fluid being superheated steam), gas turbine based power plants (working fluid being hot gases), and aero-derivative based power plants - cause an increase in the internal temperature of the generator, especially the rotor windings. The generator rotors of steam turbines and gas turbines operate in the order of several thousand revolutions per minute, and the internal temperature of the electric generator and the rotor thereof is in excess of 1000ºC. Typically, higher rotational speeds (approximately 3000 rpm) result in higher power generation. However, higher rotational speeds also increase the temperature of the windings.

The rotor windings and stator windings undergo mechanical damages - such as cracks, melt downs, and disconnections - due to the higher rotor temperatures, thereby decreasing the operational life span of the windings and also reducing the operating efficiency and performance of the electric generators. Furthermore, damages caused to the windings can be permanent and can also result in a disruption in the power output of the electric generator, thereby leading to the shutdown of the generator. Therefore, appropriate cooling techniques are required to be deployed for the purpose of reducing the temperature of the rotor windings and the stator windings, for the purpose of protecting the rotor windings and the stator windings from extreme thermal conditions. In a popular and a preferred cooling technique, the entire generator section is sealed from other sections of the power generation unit, and high specific heat capacity coolant fluids (i.e. high volumetric heat capacity coolant fluids), such as Hydrogen or Helium, are dispensed into the windings for removing the heat from the windings by means of thermal convection, thereby leading to a reduction in the temperature of the windings. According to this technique, an arrangement comprising a coolant fluid supply chamber, a plurality of axially extending splines arranged on a portion of the rotor shaft that is closer to the coolant fluid supply chamber, and a blower module arranged on the plurality of splines is utilised. The blower module is arranged on the aforesaid portion of the rotor shaft, especially on the splines. The coolant fluid is stored in the coolant fluid supply chamber, and the coolant fluid is then dispensed towards the rotor windings via the blower module. The coolant fluid is directed towards the windings, especially the rotor windings, by means of the axially extending splines. The coolant fluid circulates inside the electric generator as defined by a coolant fluid flow path, removes the heat from the windings by means of thermal convection, and returns to the coolant fluid supply chamber. The coolant fluid supply chamber also cools the arriving coolant fluid that contains the heat convected from the windings, and prepares the coolant fluid for dispensing the coolant fluid towards the windings for the purpose of recirculation inside the electric generator. Herein, the coolant fluid circulates within the electric generator and the coolant fluid flow path is a closed loop path.

Currently, in order to enhance the reduction of the rotor temperature, especially the temperature of the windings, one or more of the following methods is used: velocity of the coolant fluid directly exiting from the coolant fluid supply chamber towards the windings is directly increased, or the operational speed of rotation of the rotor is reduced, or the electric current circulating in the windings is reduced. However, there are many limitations that accompany the aforementioned temperature reduction techniques. For example, the overhead on the design of the coolant fluid supply chamber, which is adapted to increase coolant fluid dispensation velocity, and also the constructional complexity thereof increase with increasing needs of higher coolant fluid dispensation velocities, thereby leading to an increase in the cost of the electric generator. Whereas by decreasing the speed of rotation of the generator rotor and/or by reducing the current circulating in the windings, the generator output and generator efficiency are significantly reduced, thereby reducing the operating performance of the electric generator. Furthermore, the cost of the electric generator increases, if extremely sophisticated and extremely high velocity/pressure cooling arrangements are deployed. Thus, the presently available cooling techniques for reducing the temperature of the windings possess a multitude of drawbacks and limitations.

Therefore, it is an object of the present invention to overcome the aforementioned limitations and problems of the current art by proposing a simple and a modified design of the generator rotor for increasing the coolant fluid velocity, such that the modified generator rotor design is not only cost effective and easier to construct, but also achieves better cooling and enhances the reduction of temperature of the windings, even for higher operational speeds of the generator rotor. Furthermore, the modified generator rotor design is such that the design of the coolant fluid supply chamber for any particular electric generator is not required to be modified and the same can be obviated.

The aforementioned objective is achieved by a generator rotor in accordance with claim 1, and a method for construction of the generator rotor in accordance with claim 14.

The underlying object of the present invention is to propose a modified design of a generator rotor for an electric generator instead of a modification to the design of a coolant storage supply chamber for increasing the coolant fluid flow velocity inside the electric generator, such that a higher velocity coolant fluid is capable of being produced and dispensed towards different parts of the electric generator, thereby increasing the efficacy of cooling of different parts of the generator rotor and the electric generator. Furthermore, the object is also to modify the design of the generator rotor such that the design of the coolant storage supply chamber remains intact, in order to increase the simplicity of the overall design of the generator, and also to achieve a reduction in the cost of the generator rotor.

A generator rotor extending along a longitudinal axis, i.e. longitudinally, is proposed in the present invention. The generator rotor comprises a rotor shaft and at least one spline. The spline is a radially and a longitudinally extending member on the rotor shaft. The spline is arranged on a portion of the rotor shaft, and the spline is provided for the purpose of directing a coolant fluid inside the electric generator during the operation of the generator rotor. The spline is arranged to direct the coolant fluid, especially flowing on the portion of the generator rotor, towards a certain region of the electric generator that is required to be cooled for reducing the temperature thereof during the operation of the generator rotor. Such a region of the electric generator can be, for example, rotor windings of the generator rotor.

According to the present invention, the spline longitudinally extends in a direction that is off-axial to the longitudinal axis of the generator rotor. I.e. the respective directions of extensions of the spline and the generator rotor are different, and longitudinal extensions of the same define an offset there between. During the operation of the generator rotor, i.e. when the generator rotor executes rotations, the spline, which extends in a direction off-axial to the generator rotor, creates a blading effect for the coolant fluid flowing over the portion of the generator rotor comprising the spline. The blading effect is similar to velocity changes produced by rotating fan blades, wherein the velocities of air on either side of the rotating fan blades are different, i.e. in accordance with the working principle of a fan. The blading effect generated therein results in a non-uniform distribution of coolant fluid flow velocities on the portion of the generator rotor as well as on either ends of the spline. I.e. the velocities of the coolant fluid at either ends of the spline are different. Thus, by simply providing minimal modifications to the design of the portion of the generator rotor comprising the spline, and also by arranging the spline appropriately, it is possible to produce a velocity difference at either ends of the spline, thereby producing different coolant fluid flow velocities on either ends of the spline.

As an advantage, it is possible to increase the coolant fluid flow velocity by modifying the design of the portion of the generator rotor comprising the spline alone without affecting the design of other entities of the electric generator. Therefore, by making minimal modifications to the design of the generator rotor, it is possible to reduce the cost of the electric generator, therewith enabling the achievement of enhanced efficacy of cooling.

According to an embodiment of the present invention, the spline is integral to the rotor shaft. Herein, the spline and the rotor shaft are integrally connected such that the spline and the rotor shaft constitute a single continuous component, i.e. the spline and the rotor shaft are not capable of being dismantled during normal operating conditions of the generator rotor. Since the spline is integral to the rotor shaft, the strength and the operational stability of the spline are considerably enhanced as compared to a spline individually mounted on the rotor shaft. In this way, stress concentration and fretting at a connecting region of the rotor shaft and the spline are preventable due to the integral nature of the spline and the rotor shaft. Also, it is easier to manufacture such a generator rotor, as the integral spline on the rotor shaft can be directly obtained by popular techniques such as machining, laser sintering, Electric Discharge Machining, casting, et cetera.

According to another embodiment of the present invention, the spline is removably connected to the rotor shaft. In this embodiment, the spline and the rotor shaft are independent components, and a connection between the spline and the rotor shaft is enabled by any suitable connecting means such as tie bolts, screws, clamps, et cetera. This advantageously enables easy dismantlement of the spline and the rotor shaft, which is beneficial during spline replacement that is performed in case of damages caused to the spline.

According to yet another embodiment of the present invention, the spline defines a positive longitudinal gradient with respect to the longitudinal axis. I.e. an angle between a longitudinal axis of the spline and a longitudinal axis of the rotor shaft is construed to be positive, and the spline defines a positive slope with respect to the rotor shaft. This advantageously increases the coolant fluid flow velocity at the spline, if the direction of rotation (i.e. a spinning direction) of the generator rotor is clockwise.

According to yet another embodiment of the present invention, the spline defines a negative longitudinal gradient with respect to the longitudinal axis. I.e. an angle between a longitudinal axis of the spline and a longitudinal axis of the rotor shaft is construed to be negative, and the spline defines a negative slope with respect to the rotor shaft. This advantageously increases the coolant fluid flow velocity at the spline, if the direction of rotation (i.e. a spinning direction) of the generator rotor is anticlockwise.

According to yet another embodiment of the present invention, a radial cross-section of the spline is wedge-shaped. A wedge-shaped profile of the spine gives forth to two opposing surfaces of differing surface areas. One of the surfaces enables a connection between the spline and the rotor shaft, whereas the other surface is beneficial for mounting a module such as a blower module. Furthermore, if there is more than one spline circumferentially arranged on the rotor shaft, then gaps between the wedge shaped splines serve as channels through which the coolant fluid is dispensable inside the electric generator.

According to yet another embodiment of the present invention, the radial cross-section of the spline is such that the spline is tapered in a radially inward direction. The radially inward tapering profile of the spine gives forth to two opposing surfaces of differing surface areas, viz. a radially outward surface and a radially inward surface. The surface area of the radially outward surface is more than the surface area of the radially inward surface. This is beneficial for stably mounting a blower module on the spline, because of the availability of a higher common contact surface between the blower module and the radially outward surface.

According to yet another embodiment of the present invention, a radial cross-section of the spline is concave. A concave profile of the spline is beneficial when there is a plurality of splines provided on the rotor shaft. Concave channels formed between adjacent splines are advantageous for streamlining the coolant fluid flow during the operation of the generator rotor. A streamlined flow of the coolant fluid not only increases the efficiency of cooling, but also increases the mechanical stability of the generator rotor.

According to yet another embodiment of the present invention, the generator rotor comprises a blower module. The blower module is circumferentially arranged on the spline. According to a preferred embodiment, the blower module is arranged in a radially outward direction, for example on the radially outward surface of the spline. By means of a blower module mounted on the spline, it is possible to further increase the velocity of the coolant fluid exiting the spline, wherewith efficacy of cooling the electric generator is further enhanced.

According to yet another embodiment of the present invention, the generator rotor comprises a rotor end turn winding. The rotor end turn winding is located downstream to the spline. The rotor end turn winding is a part of the generator rotor which is required to withstand immense heating during the operation of the electric generator. Since the rotor end turn winding is arranged and located downstream to the spline, the high velocity coolant fluid is capable of being directly provided to the rotor end turn winding for impinging thereon. Therewith, the efficacy of cooling the rotor end turn winding is further increased.

The present invention also discloses an electric generator that comprises the generator rotor according to any of the aforementioned embodiments. The electric generator possesses all the aforementioned advantages of the generator rotor.

According to an embodiment of the present invention, the electric generator comprises coolant fluid supply chamber. The coolant fluid supply chamber stores the coolant fluid required for cooling the electric generator. The coolant fluid supply chamber is also configured to dispense the coolant fluid towards the spline, wherewith the coolant fluid velocity is increasable for providing the same for cooling other parts of the electric generator.

A method for construction of the aforementioned generator rotor is also disclosed in the present invention. The rotor shaft is initially provided. Thereafter, the spline is provided on the portion of the rotor shaft for directing the coolant fluid flowing on the portion during the operation of the generator rotor. The spline longitudinally extends in a direction off-axis to the longitudinal axis. Advantageously, it is possible to increase the coolant fluid flow velocity by modifying the design of the portion of the generator rotor comprising the spline alone without affecting the design of other entities of the electric generator. Therefore, by making minimal modifications to the design of the generator rotor, it is possible to reduce the cost of the electric generator, therewith enabling the achievement of enhanced efficacy of cooling.

According to an embodiment of the method of the present invention, the spline is capable of being provided on the rotor shaft by any of the following exemplary processes casting, laser sintering, moulding, machining, Electric Discharge Machining, forging, or welding. These processes are popular manufacturing and machining techniques and the obtainment of the spline on the rotor shaft is simplified by using any of these processes.

The aforementioned and other embodiments of the present invention related to a generator rotor for an electric generator and a method for construction thereof will now be addressed with reference to the accompanying drawings of the present invention. The illustrated embodiments are intended to illustrate, but not to limit the invention. The accompanying drawings herewith contain the following FIGs, in which like numbers refer to like parts, throughout the description and drawings.

The FIGs illustrate in a schematic manner further examples of the embodiments of the invention, in which:
- FIG 1: depicts a schematic of an exemplary electric generator comprising a generator rotor according to one or more embodiments of the present invention,
- FIG 2: depicts an embodiment of a spline provided on a portion of the generator rotor referred to in FIG 1,
- FIG 3: depicts another embodiment of a spline provided on a portion of the generator rotor referred to in FIG 1,
- FIG 4A-4C: depict different radial cross-sections of the spline referred to in FIG 2 and FIG 3, and
- FIG 5: depicts a flowchart of an exemplary method for construction of the generator rotor referred to in FIG 1.

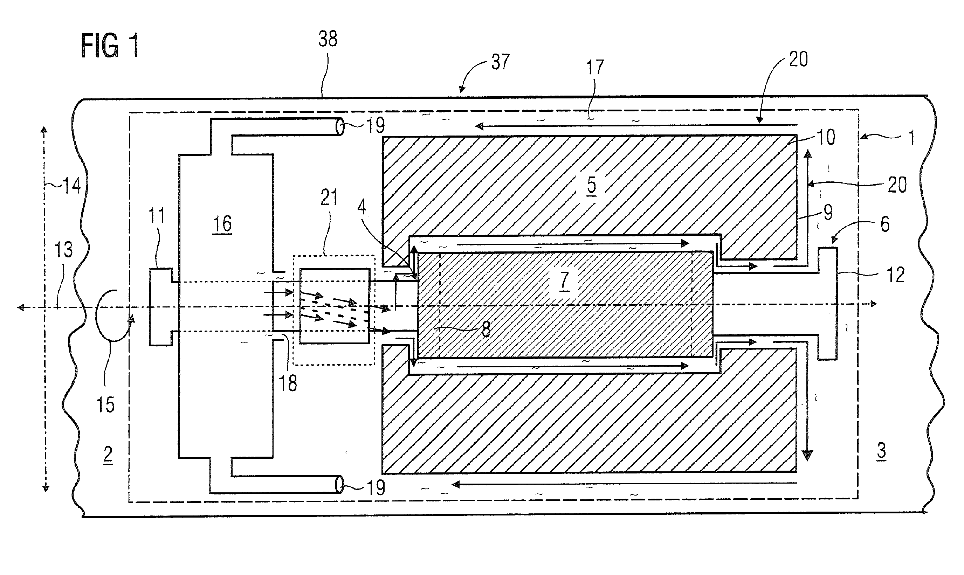

A schematic of an electric generator 1 according to an embodiment of the present invention is depicted in FIG 1.

The electric generator 1 is typically a part of an exemplary turbomachine 37, such as a gas turbine or a steam turbine or an aero-derivative turbine, which is used in a power plant for the purpose of power generation. However, for the purpose of elucidation of the present invention, the turbomachine 37 is considered to be an exemplary gas turbine, and the electric generator 1 forms a part of the gas turbine 37. The electric generator 1 is enclosed within a casing 38 of the gas turbine 37.

The gas turbine 37 primarily comprises a combustion section 2 and an exhaust section 3. The electric generator 1 is operationally located between the combustion section 2 and the exhaust section 3. Herein, with respect to the electric generator 1, the combustion section 2 is located upstream to the electric generator 1 and is therefore termed as an upstream stage, whereas the exhaust section 3 is located downstream to the electric generator 1 and is therefore termed as a downstream stage.

The electric generator 1 of FIG 1 comprises a generator rotor 4 and a generator stator 5. The generator rotor 4 is arranged inside the generator stator 5, and the generator rotor 4 is both electrically and operationally coupled to the generator stator 5 for the purpose of electric power generation.

The generator rotor 4 primarily comprises a rotor shaft 6 and a rotor winding 7. The rotor shaft 6 can be constructed either as a completely solid component or a hollow component. The rotor winding 7 is to be construed as electrical windings provided on the rotor shaft 6 for carrying rotor currents.

The rotor winding 7 comprises rotor end turn winding 8, and the rotor end turn winding 8 are electrically connected to slip rings (not depicted) wherefrom the generated power is drawn during the operation of the electric generator 1.

The rotor shaft 6 extends along a longitudinal axis 13 of the gas turbine 37, and the longitudinal axis 13 herein is to be construed as a rotational axis of the gas turbine 37. Furthermore, in the context of the present invention, the terms 'a radial direction' or 'a radial extension' is to be construed as any direction that is perpendicular to the longitudinal axis 13 of the gas turbine 37. The radial direction is indicated by a reference numeral '14'.

The rotor shaft 6 is provided with two connecting means, viz. an upstream connecting means 11 and a downstream connecting means 12, for the purpose of connecting the generator rotor 4 to different stages of the gas turbine 37. The upstream connecting means 11 longitudinally opposes the downstream connecting means 12. The upstream connecting means 11 enables a physical connection of the rotor shaft 6 with the combustion section 2, and the downstream connecting means 12 enables a physical connection of the rotor shaft 6 with the exhaust section 3. Each of the connecting means, viz. the upstream connecting means 11 and the downstream connecting means 12, can be exemplarily realised as a flange provided on the rotor shaft 6 along with one or more nuts and bolts for connecting and tightening the respective flange to corresponding flanges (not depicted) of the respective stage (upstream stage 2 or downstream stage 3).

The generator stator 5 primarily comprises a stator core 9 and a stator winding 10. The stator winding 10 is to be construed as electrical windings provided on the stator core 9 for carrying stator currents. The stator core 9 depicted in FIG 1 is a longitudinally extending hollow component, and the generator stator 5 is designed and dimensioned such that the generator rotor 4 is longitudinally arrangeable inside the generator stator 5, and the generator rotor 4 is also freely rotatable inside the generator stator 5 during the operation of the electric generator 1. An operational direction of rotation of the rotor shaft 6 is indicated by a spinning direction 15, and the spinning direction 15 can be either clockwise or anticlockwise.

A coolant fluid supply chamber 16 is arranged upstream to the electric generator 1, especially the rotor end turn winding 8 and the coolant fluid supply chamber 16 stores a high specific heat capacity coolant fluid 17, such as hydrogen or helium, for the purpose of being provided to the electric generator 1 for cooling the electric generator 1. The coolant fluid supply chamber 16 dispenses the coolant fluid 17, especially towards the rotor winding 7 - more specifically towards the rotor end turn winding 8 - mounted on the rotor shaft 6, for the purpose of cooling the rotor winding 7.

The coolant fluid supply chamber 16 comprises a coolant outlet 18 and a coolant inlet 19. During the operation of the electric generator 1, coolant fluid supply chamber 16 dispenses the coolant fluid 17 with a certain pressure and a certain coolant fluid flow velocity such that the coolant fluid 17 exits the coolant fluid supply chamber 16 via the coolant outlet 18, enters into the electric generator 1 by flowing across the rotor shaft 6, traverses through the rotor winding 7 and the stator winding 10, removes the heat from the rotor winding 7 and the stator winding 10, and returns to the coolant fluid supply chamber 16 via the coolant inlet 19. Thereafter, heat exchange units (not depicted) of the coolant fluid supply chamber 16 remove the heat present in the coolant fluid 17, reduce the temperature of the coolant fluid 17, and prepare the coolant fluid 17 to be dispensed again into the electric generator 1 for the purpose of circulating therein. This is referred to as a coolant fluid cycle. A path taken by the coolant fluid 17, which is to be construed as the path of flow of the coolant fluid 17 starting from the coolant fluid outlet 18 and culminating at the coolant fluid inlet 19, is referred to herein as a coolant fluid flow path 20.

A blower module 34 is mounted on a portion 21 of the rotor shaft 6 for blowing the coolant fluid 17 flowing across the rotor shaft 6 towards the rotor winding 7. The blower module 34 comprises a circumferential arrangement of a plurality of blades (not depicted), i.e. the plurality of the blades is arranged circumferentially around the portion 21 of the rotor shaft 6. For example, the blower module 34 can be a commercially available multistage blower such as a 3-stage blower or a 5-stage blower. During the operation of the generator rotor 4, i.e. during the rotations executed by the generator rotor 4, the blower module 34 sucks in the coolant fluid 17 from the coolant outlet 18 and blows the coolant fluid 17 towards the rotor end turn winding 8. The portion 21 of the rotor shaft 6 is located between the coolant outlet 18 and the rotor end turn winding 8, i.e. the blower module 34 is located between the coolant outlet 18 and the rotor end turn winding 8. The blower module 34 enables an enhancement in the coolant fluid flow velocity locally.

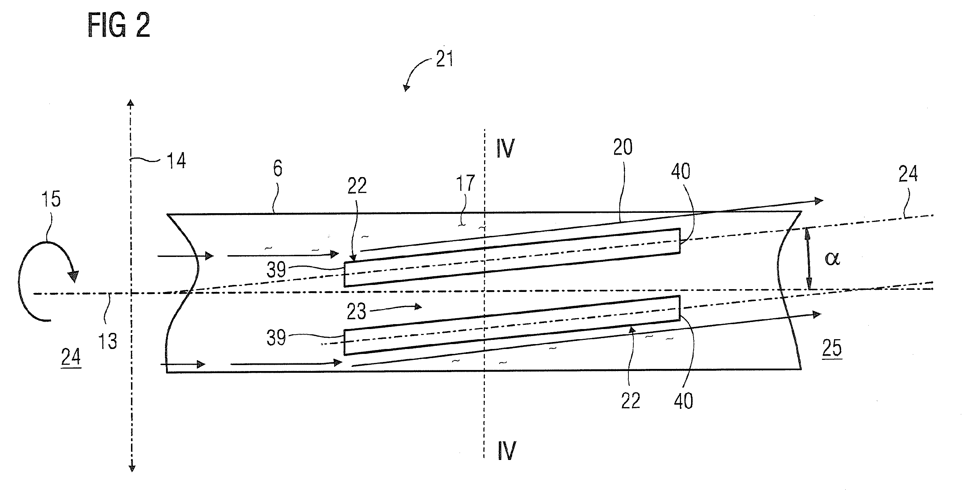

However, according to different embodiments of the present invention, the portion 21 of the rotor shaft 6 is geometrically profiled, dimensioned, and configured for further increasing the coolant fluid flow velocity, which is performed prior to the entry of the coolant fluid 17 into the rotor end turn winding 8. I.e. the influence of the geometric profile of the portion 21 of rotor shaft 6 is such that the coolant fluid flow velocity is increased within the coolant fluid flow path 20, and also in addition to the velocity enhancement provided to the coolant fluid 17 by the blower module 34. Such geometrical profiles of the portion 21 of the rotor shaft 6 for further enhancing the coolant fluid flow velocity are elucidated in the subsequent paragraphs and with respect to FIG 2 until FIG 4C.

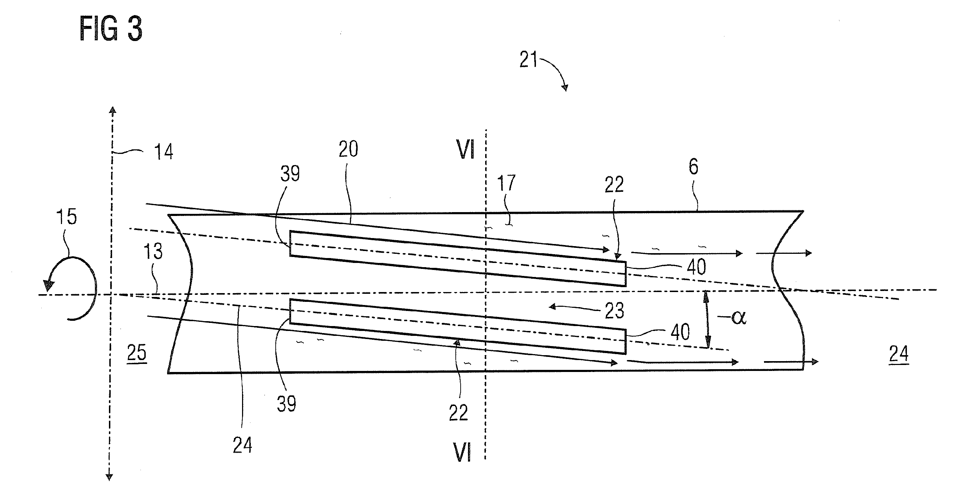

FIG 2 and FIG 3 depict two different embodiments of the rotor shaft 6 of the generator rotor 4, especially different geometrical profiles of the portion 21 of the rotor shaft 6, which comprises splines 22 on the portion 21 of the rotor shaft 6, in order to achieve the aforementioned additional enhancement of the coolant fluid flow velocity within the coolant fluid flow path 20. Certain paragraphs hereunder describe the effect of the splines 22 on the coolant fluid 17 flowing on the portion 21 of the rotor shaft 6, and the arrangement of the splines 22, by jointly referring to FIG 2 and FIG 3.

It may be noted herein that a spline 22 is an elongated and a three dimensional member provided on the portion 21 of the rotor shaft 6 for the purpose of directing the coolant fluid 17 inside the electric generator 1 during the operation of the generator rotor 4. The spline 22 is designed and arranged to direct the coolant fluid 17, especially flowing on the portion 21 of the generator rotor 4, towards a certain region of the electric generator 1 that is required to be cooled for reducing the internal temperature thereof, specifically during the operation of the generator rotor 4. Herein, the internal temperature is especially related to the temperature of the generator rotor and the rotor windings thereof. Herein, a channel 23 is formed between any two neighbouring splines 22, and the channel 23 is beneficial for dispensing the coolant fluid 17 thereunto towards the aforementioned region. The region can be, for example, the rotor end turn winding 8. However, the combined effect of the alignment of the spline 22 with respect to the longitudinal axis 13 of the gas turbine 37 and the rotations executed by the generator rotor 4 can produce an acceleration of the coolant fluid 17 flowing over the portion 21 of the generator rotor 4, especially in the channels 23 between the neighbouring splines 22.

In the present invention, the spline 22 is arranged on the portion 21 of the rotor shaft 6, such that the spline 22 extends longitudinally in a direction that is off-axial with respect to the longitudinal axis 13 of the gas turbine 37. I.e. there is an angular offset between a longitudinal axis 24 of the spline 22 and the longitudinal axis 13 of the gas turbine 37, i.e. the angular offset between the spline 22 and the rotor shaft 6 is observable when viewed in a direction along the longitudinal axis 13 of the gas turbine 37. The longitudinal axis 24 of the spline 22 is herein defined as an axis of elongation between an upstream end 39 and a downstream end 40 of the spline 22. More specifically, the longitudinal axis 24 of the spline 22 and the longitudinal axis 13 of the gas turbine 37 are not parallel in any two dimensional plane that contains both the longitudinal axis 24 of the spline 22 and the longitudinal axis 13 of the gas turbine 37. Herein, the angular offset is also termed as a longitudinal gradient (or slope), and the longitudinal gradient can be either positive or negative.

Herein, the combined effect of the rotations of the generator rotor 4 and the off-axial arrangement of the splines 22 produces a blading effect of the coolant fluid 17 flowing on the portion 21 of the rotor shaft 6. The blading effect generated therein results in a non-uniform distribution of coolant fluid flow velocities on the portion 21 of the generator rotor 4 as well as at either ends of the spline 22, viz. the upstream end 39 and the downstream end 40 of the spline 22, and the same can accelerate the coolant fluid 17 flowing over the portion 21 of the rotor shaft 6 in a direction towards the rotor winding 7 depending on the alignment of the spline 22 with respect to the longitudinal axis 13 of the gas turbine 37. I.e. the velocities of the coolant fluid 17 at either ends 39,40 of the spline 22 are different. When the generator rotor 4 operates at very speeds, for example, ∼ 3000 rpm, the geometric design of the spline 22 and the off-axial arrangement of the spline 22 together produce a velocity difference at either ends 39,40 of the spline 22, thereby producing different coolant fluid flow velocities on either ends 39,40 of the spline 22, and also in the channel 23 formed between the neighbouring splines 22.

The aforementioned velocity difference of the coolant fluid 17 between the upstream end 39 and the downstream end 40 of the spline 22 creates a high velocity side 25 and a low velocity side 26 on either sides of the spline 22. The relative position of the high velocity side 25 and the low velocity side 26 with respect to the spline 22 depends on two parameters, viz. the spinning direction 15 of the generator rotor 4 and the longitudinal gradient of the spline 22. Since the rotor winding 7 of the electric generator 1 is to be efficiently cooled, it is desirable to effectuate the high velocity side 25 near the rotor winding 7, i.e. at the downstream end 40 of the spline 22, because the coolant fluid flow velocity at the high velocity side 25 will be higher than the coolant fluid flow velocity at the low velocity side 26 due to the acceleration of the coolant fluid 17 across the spline 22, thereby increasing the efficacy of cooling of the rotor winding 7.

FIG 2 depicts an embodiment of the spline 22, wherein the spline 22 possesses a positive longitudinal gradient (α).Herein, if the longitudinal axis 13 of the gas turbine 37 is considered as a reference, then the upstream end 39 of the spline 22 is located below the downstream end 40 of the spline 22, whereby obtaining the spline 22 with the positive longitudinal gradient (α). Such an arrangement and alignment of the spline 22 on the portion 21 of the rotor shaft 6 is beneficial, if the spinning direction 15 of the generator rotor 4 is clockwise. Thus, during the operation of the electric generator 1, the high velocity side 25 is effectuated and located downstream to the spline 22, and the low velocity side 26 is effectuated and located upstream to the spline 22, and the coolant fluid 17 is accelerated in a direction towards the downstream end 40 of the spline 22, and is beneficial for cooling the rotor winding 7, because the rotor winding 7 is located downstream to the spline 22. Herein, 0º < α < 45º, is preferably maintained.

FIG 3 depicts another embodiment of the spline 22, wherein the spline 22 possesses a negative longitudinal gradient (-α). Herein, if the longitudinal axis 13 of the gas turbine 37 is again considered as the reference, then the upstream end 39 of the spline 22 is located above the downstream end 40 of the spline 22, whereby obtaining the spline 22 with the negative longitudinal gradient (-α). Such an arrangement and alignment of the spline 22 on the portion 21 of the rotor shaft 6 is beneficial, if the spinning direction 15 of the generator rotor 4 is anticlockwise. Thus, during the operation of the electric generator 1, the high velocity side 25 is again effectuated and located downstream to the spline 22, and the low velocity side 26 is effectuated and located upstream to the spline 22, and the coolant fluid 17 is again accelerated in a direction towards the downstream end 40 of the spline 22, and this is again beneficial due to the downstream location of the rotor winding 7 with respect to the spline 22. Herein, 0º > -α > -45º, is preferably maintained.

Herein, the spline 22 on the portion 21 of the rotor shaft 6 can be constructed by different manufacturing and machining techniques and processes, such as but not limited to, casting, forging, Electric Discharge Machining, laser sintering, et cetera. For example, a cylindrical metallic object (not depicted) made of either high-speed steel or a metal based alloy, can be machined in accordance with an intended geometric profile (such as a CAD profile) of the portion 21 of the rotor shaft 6 comprising the spline 22 for obtaining such a portion 21 of the rotor shaft 6 comprising the spline 22. Alternatively, based on a 3D machine profile (stereolithographic profile) of the portion 21 comprising the spline 22, the rotor shaft 6 comprising the spline 22 can be laser sintered to obtain the same.

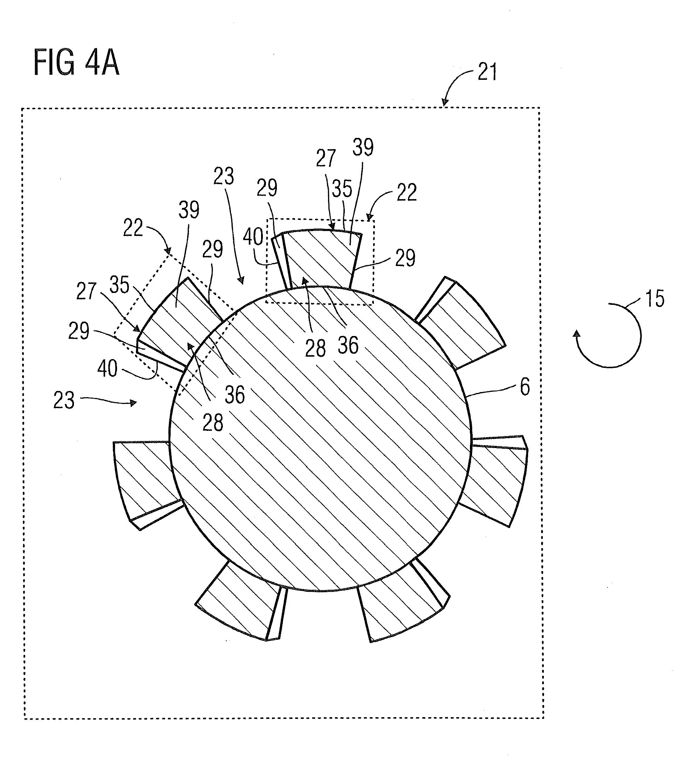

FIG 4A until FIG 4C depict different radial cross-sections IV-IV of the exemplary spline 22 depicted in FIG 2. Cross-reference is made herein to FIG 2 for the purpose of elucidation of FIG 4A until FIG 4C.

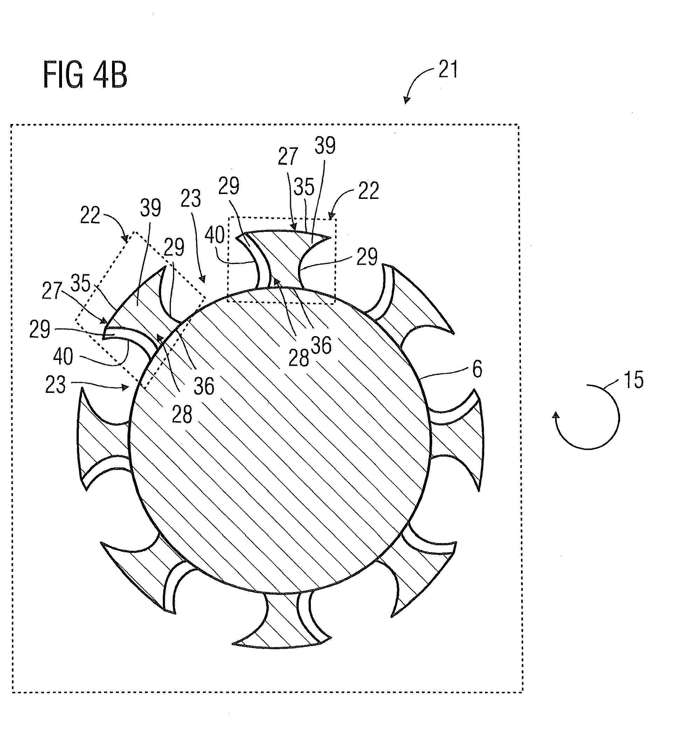

In accordance with different embodiments of the invention, the spline 22 can be of different shapes and types. Two such exemplary shapes are depicted in FIG 4A and FIG 4B. Furthermore, the spline 22 can be either integral to the rotor shaft 6 or can be removably connected to the rotor shaft 6. It may be noted herein that the spline 22 comprises two radially opposing portions, viz. a spline tip portion 27 and a spline root portion 28. The spline 22 is connected to the rotor shaft 6 at the spline root portion 28, and the blower module 34 is typically mounted on the spline tip portion 27. The spline tip portion 27 is located radially outward as compared to the spline root portion 28.

FIG 4A and FIG 4B depict two different geometric profiles (or shapes) of the splines 22 provided on the portion 21 of the rotor shaft 6. The splines 22 depicted in FIG 4A and FIG 4B are integral to the rotor shaft 6, i.e. the spline 22 and the rotor shaft 6 are integrally connected to each other such that the spline 22 and the rotor shaft 6 constitute a single continuous component, wherewith the spline 22 and the rotor shaft 6 are not capable of being dismantled or disassembled under normal circumstances until the spline 22 is broken away from the rotor shaft 6. The portion 21 of the rotor shaft 6 and the spline 22 form a monolithic unit, and the spline root portion 28 is in itself continuous and an integral part of the rotor shaft 6.

An integral wedge shaped spline 22 is depicted in FIG 4A, and an integral concave spline 22 is depicted in FIG 4B. The splines 22 depicted therein are also tapered in a radially inward direction, therewith two opposing surfaces 35,36 are obtained, viz. a radially outward surface 35 at the spline tip portion 27, and a radially inward surface 36 at the spline root portion 28. Herein, due to the radially tapered profile of the spline 22, an area of the radially outward surface 35 is higher than an area of the radially inward surface 36. This is beneficial for mounting the blower module 34 on the spline 22, because a higher common contact surface area between the blower module 34 and the spline 22 is obtainable, thereby resulting in a better fit between the blower module 34 and the spline 22.

In the integral wedge shaped spline 22 of FIG 4A, opposing spline sidewalls 29 of the neighbouring splines 22 are straight, and the opposing spline sidewalls 29 of the neighbouring splines 22 essentially taper towards the spline root portion 28. Thus, the channels 23 formed between the neighbouring splines 22 are trapezoidal. Whereas in the integral concave spline 22 of FIG 4B, the opposing spline sidewalls 29 of the neighbouring splines 22 are concave, and the spline sidewalls 29 of the neighbouring splines 22 are essentially convex shaped. Thus, the channels 23 formed between the neighbouring splines 22 are convex shaped. The different shapes of the channels 23 formed therein are advantageous for streamlining the flow of the coolant fluid 17 inside the channels 23 during the operation of the generator rotor 4. A streamlined flow of the coolant fluid 17 not only increases the efficiency of cooling, but also increases the mechanical stability of the generator rotor 4.

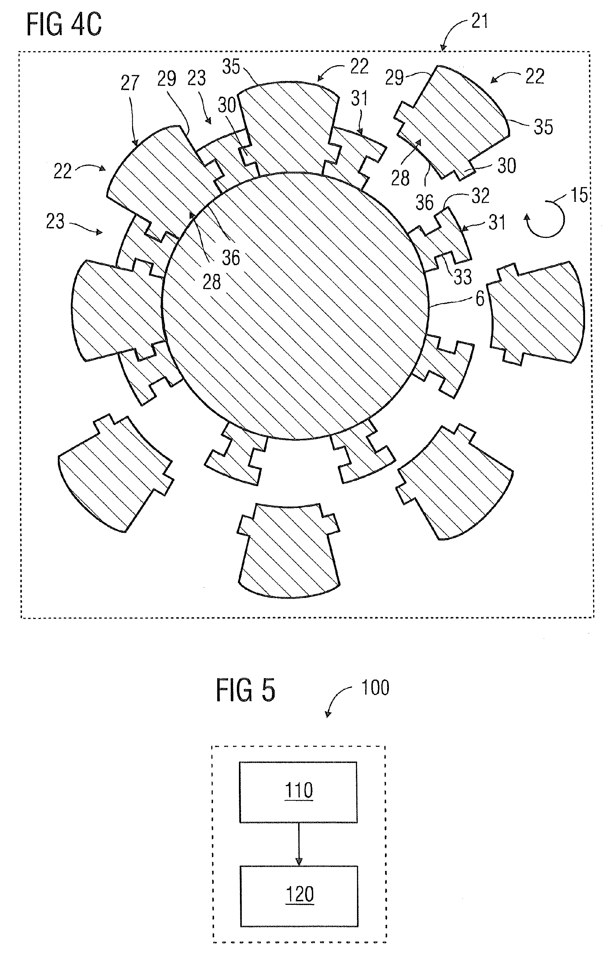

FIG 4C depicts a partially exploded view of another embodiment of the splines 22 provided on the portion 21 of the rotor shaft 6.

In this embodiment, the splines 22 are removably connected to the rotor shaft 6, i.e. the splines 22 are capable of being disassembled without damaging the rotor shaft 6. Each spline 22 is manufactured in the form of an insert, and the spline 22 comprises two circumferentially opposing spline sidewalls 29, and each of the spline sidewalls 29 comprises a spline protrusion 30. The spline protrusion 30 extends in a direction along the longitudinal axis 24 of the spline 22, and the spline protrusion 30 is located between the radially outward surface 35 and the radially inward surface 36 of the spline 22.

In the embodiment depicted in FIG 4C, the rotor shaft 6 comprises an annular arrangement of a plurality of brackets 31 for supporting the mounting of the spline 22, and the plurality of brackets 31 is arranged circumferentially on the rotor shaft 6 and also in a radially outward manner. Each of the brackets 31 comprises circumferentially opposing bracket sidewalls 32, and each of the bracket sidewalls 32 comprises a bracket groove 33. The bracket groove 33 extends in a direction along the longitudinal axis 24 of the spline 22. The spline 22 can be now mounted on the portion 21 of the rotor shaft 6 by inserting each of the corresponding spline protrusion 30 into the corresponding bracket groove 33. Thereafter, the spline 22 can be fixed and tightened to the portion 21 of the rotor shaft 6, for example, by any suitable fastening means (not depicted) such as screws, nuts and bolts, or rivets, et cetera. The spline 22 can be removed by from the rotor shaft 6 by unfastening the fastening means.

It may be noted herein that the spline sidewalls 29 and the corresponding bracket sidewalls 32 contact each other when the splines 22 are inserted between the neighbouring brackets 31. Thus, in order to realise the channels 23 between the neighbouring splines 22 for the purpose of dispensing the coolant fluid 17 therein, the splines 22 and the brackets 31 are dimensioned such that a height of the spline 22 (hₛ) is preferably more than a height of the bracket (h_{b}) 31. In this embodiment, the spline 22 and the bracket 31 can be made of the same material (metals/metallic alloys) or of different materials. Furthermore, removably connectable splines 22 are beneficial for replacement of splines 22, which is performed during the time of service of the electric generator 1 or in case the spline 22 is damaged and is required to be replaced.

Without loss of generality, the embodiment of the generator rotor 4 comprising the spline 22, as depicted in FIG 4C, can be modified in a complementary manner for obtaining another embodiment (not depicted) of the generator rotor 4 comprising the spline 22. In such an alternate embodiment, the spline 22 may provided with spline grooves on the spline sidewalls 29, and the brackets 31 on the rotor shaft 6 may be provided with bracket protrusions on the bracket sidewalls 32. The splines 22 may be arranged between the corresponding brackets 31 by inserting the bracket protrusions into the corresponding spline grooves. Again, the splines 22 and the brackets 31 are dimensioned such that a height of the spline (hₛ) 22 is preferably more than the height of the bracket (h_{b}) 31 for the purpose of realising the channels 23 between different neighbouring splines 22.
FIG 5 depicts an exemplary method 100 for construction of the aforementioned generator rotor 4 comprising the rotor shaft 6, wherein the portion 21 of the rotor shaft 6 is provided with the splines 22 in accordance with the present invention.

In step 110, the aforementioned rotor shaft 6 is provided. In a subsequent step 120, the spline 22 is provided on the portion 21 of the rotor shaft 6. The spline 22 is arranged on the portion 21 of the rotor shaft 6 such that the coolant fluid 17 is dispensable - during the operation of the electric generator 1 - through the channel 23 formed between neighbouring splines 22. The spline 22 provided therein extends in the direction that is off-axial to the longitudinal axis 13 of the gas turbine 37. As mentioned in the hereinabove paragraphs, the spline 22 may be provided on the portion 21 of the rotor shaft 6 by any of the following techniques/processes: casting, laser sintering, moulding, machining, Electric Discharge Machining, forging, and/or welding.

Though the invention has been described with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A generator rotor (4), wherein the generator rotor (4) extends along a longitudinal axis (13), the generator rotor (4) comprising:
- a rotor shaft (6), and
- at least one spline (22) arranged on a portion (21) of the rotor shaft (6) for directing a coolant fluid (17) flowing on the portion (21) during the operation of the generator rotor (4),
**characterized in that** the spline (22) longitudinally extends in a direction (24) off-axis to the longitudinal axis (13).

2. The generator rotor (4) according to claim 1, wherein the spline (22) is integral to the rotor shaft (6).

3. The generator rotor (4) according to claim 1, wherein the spline (22) is removably connected to the rotor shaft (6).

4. The generator rotor (4) according to any of the claims 1 to 3, wherein the spline (22) defines a positive longitudinal gradient (α) with respect to the longitudinal axis (13).

5. The generator rotor (4) according to any of the claims 1 to 3, wherein the spline (22) defines a negative longitudinal gradient (-α) with respect to the longitudinal axis (13).

6. The generator rotor (4) according to any of the claims 1 to 5, wherein a radial cross-section (IV-IV) of the spline (22) is wedge shaped.

7. The generator rotor (4) according to claim 6, wherein the radial cross-section (IV-IV) of the spline (22) is such that the spline (22) is tapered in a radially inward direction.

8. The generator rotor (4) according to any of the claims 1 to 5, wherein a radial cross-section (IV-IV) of the spline (22) is concave.

9. The generator rotor (4) according to any of the claims 1 to 8, further comprising a blower module (34) circumferentially arranged on the spline (22).

10. The generator rotor (4) according to claim 9, wherein the blower module (34) is arranged on the spline (22) in a radially outward direction.

11. The generator rotor (4) according to any of the claims 1 to 10, further comprising a rotor end turn winding (8), wherein the rotor end turn winding (8) is located downstream to the spline (22).

12. An electric generator (1) comprising the generator rotor (4) according to any of the claims 1 to 11.

13. The electric generator (1) according to claim 12, further comprising a coolant fluid supply chamber (16) for dispensing the coolant fluid (17) towards the spline (22).

14. A method (100) for construction of a generator rotor (4), wherein the generator rotor (4) extends along a longitudinal axis (13), and wherein a rotation of the generator rotor (4) is defined by a spinning direction (15), the method (100) comprising:
- (110) a step of providing a rotor shaft (6), and
- (120) a step of providing a spline (22) on a portion (21) of the rotor shaft (6) for directing a coolant fluid (17) flowing on the portion (21) during the operation of the generator rotor (4),
**characterized in that** the spline (22) is provided such that the spline (22) longitudinally extends in a direction (24) off-axis to the longitudinal axis (13).

15. The method (100) according to claim 14, wherein a process for providing the spline (22) on the portion (21) of the rotor shaft (6) is selected from a group comprising, casting, laser sintering, moulding, machining, Electric Discharge Machining, forging, and welding.
